# EUROPEAN PATENT APPLICATION

(11) **EP 2 441 956 A1**
(43) Date of publication of application: **18.04.2012**
(21) Application number: 10786005.8
(22) Date of filing: 21.04.2010
(51) Int. Cl.: F03G 7/06, F01B 29/08, F01K 21/00

(54) **VAPOR EXPLOSION AND SHOCK WAVE GENERATING DEVICE, MOTOR, AND TURBINE DEVICE**

(30) Priority: 12.06.2009 WO PCT/JP2009/060805; 25.11.2009 JP 2009267226
(71) Applicant: Katsuren, Hisashi, Okinawa 907-0451 (JP)
(72) Inventor: Katsuren, Hisashi, Okinawa 907-0451 (JP)
(74) Representative: Günther, René
(86) International application number: PCT/JP2010/057032
(87) International publication number: WO 2010/143474

(57) **Abstract**

Provided is a device which can reliably generate a vapor explosion. A device which can reliably generate a vapor explosion and shock waves is proposed. This device is provided as an experimental for research and development of a vapor explosion and shock waves, and paves the way for applications to motors or turbines. A high-temperature liquid (0102) including a molten metal is retained in the inside of a liquid retention container (0101). Heating devices (0103) to maintain the high-temperature liquid at a high temperature are provided around the liquid retention container. An inlet (0104) through which water is intermittently charged is provided in the bottom portion of the liquid retention container, and a pressure-proof valve (0105) is provided in the inlet so as to close the inlet. The pressure-proof valve closes the inlet using a force of a spring (0106). However, when the pressure-proof valve is moved upwardly by a timing cam (0107), water is intermittently charged through a clearance between the valve and the inlet. When the water is intermittently charge to the bottom portion-side high-temperature liquid, an vapor explosion and shock waves occur.

## Description

### BACKGROUND OF THE THE INVENTION

### Field of the Invention

The present invention relates to a basic technology of a vapor explosion and shock wave generating device, and motor and turbine device that are driven by simultaneously utilizing vapor explosion energy and shock wave energy generated by the vapor explosion and shock wave generating device.

### Description of the Related Art

It is known that when water is rapidly heated up to an extremely high-temperature of about 370 degrees C under certain conditions, an explosion occurs. In general, the explosion is calla a 'vapor explosion', and for example, is caused when water comes into contact with molten metal at an extremely high temperature, when water and magma come into contact, or in the contact between heated frying oil and water.

Although there are some reports on vapor explosions, much remains unknown on the subject. However, considering the coefficient of volume expansion due to vaporization of water, it is inferable that the explosion caused upon the vaporization of a large amount of water generates an extreme amount of energy.

There have been attempts to utilize energy of the vapor explosion for power etc. In Japanese Patent Application No. 2000-106916, water is sprayed in a room at high-temperature by vacuum discharge, thereby causing a vapor explosion. In Japanese Unexamined Patent Application Publication No. H11-229965, water is sprayed into a combustion chamber heated by electromagnetic induction by energizing a high-frequency current.

### Cited References

Patent Reference 1: Japanese Patent Application No. 2000-106916
Patent Reference 2: Japanese Unexamined Patent Application Publication No. H11-229965

### GENERAL DESCRIPTION OF THE INVENTION

### Problems that the Invention Tries to Solve

The inventor of the present invention performed some experiments to try to discover the mechanism of the vapor explosion. At the outset, the inventor put drops of water on a surface of metal heated up to a high temperature. The water drops just vaporized on the metal surface and a vapor explosion never occurred irrespective of how high the temperature was or the amount of water used. This result was unchanged when the temperature of the metal exceeded its melting point, thereby melting the metal (First experiment).

Next, the inventor submerged the molten metal at high temperature in water. As a result, a vapor explosion occurred around the molten metal (second experiment).

Further, the inventor put drops of water on heated frying oil. While the water drops stayed on the surface of the heated oil, similar to the case of metal, they just vaporized. However, the specific weight of water is higher than oil. When the amount of the drops of water was large, the water drops sank under the oil before all of them vaporized. The water drop always caused an explosion with noise when the temperature of the oil was high enough. The inventor found that the vapor explosion occurred when the temperature of the oil was higher than 300 degrees C, and that a more intense vapor explosion occurred when the temperature of the oil was higher than 350 degrees C (third experiment).

The first experiment showed that the drops of water on the surface of the substance at high temperature does not cause the vapor explosion even when the temperature of the substance is raised up to extremely high temperature. The reason is that even when water contacts with the high-temperature substance, the temperature of the water never rises above its boiling point, of nearly 100 degrees C since the water vaporizes at 100 degrees C under normal pressure, so that the water never becomes a high temperature(exceeding 100 degrees C), a factor for causing the vapor explosion. However, in the case where the high-temperature substance sank under water (second experiment), or in the case where a small amount of water was intermittently injected into the high-temperature liquid (third experiment), the vapor explosion occurred even when the temperature was not extremely high. The common factor of the second and third experiments was that an area where the vapor explosion occurred was sealed with liquid. Here, the terms 'sealed with' just means 'entirely enclosed by ∼ and there no space for escape through the external air'. In the second experiment, the explosion area was enclosed by metal or water as liquid. In the third experiment, when water sank under oil, the explosion portion was enclosed by oil as liquid. Under such a hermetically-sealed state, in contact between two heterogeneous liquids having a large difference in temperature, heat transfer from the high-temperature liquid to a low-temperature liquid occurs, so that water is rapidly heated above nearly 100 degrees C and up to the same temperature level of the high-temperature liquid. Although the mechanism of this process is not clear enough, the experiments show that the phenomenon of rising the temperature of water far higher than 100 degrees C instantaneously causes rapid and intense vapor expansion, thereby causing the vapor explosion with high pressure. Moreover, it is found that the shock wave due to the instantaneous vapor explosion increases the pressure and expansion rate of the explosion fluid.

Meanwhile, in the first experiment, water was surrounded by the external air and was not enclosed by liquid, so that the vapor explosion did not occur.

In the energy generating device of Japanese Patent Application No. 2000-106916, water is sprayed in a vaporizing chamber heated in a vacuum at a high-temperature, thereby causing a vapor explosion. However, the first experiment showed that the vapor explosion does not occur just by spraying water on a high-temperature substance irrespective of the high temperature. In this device, the vaporizing chamber in a vacuum is made for acquiring a high-temperature by discharge. However, it is assumed that in a vacuum, water vaporizes before causing the vapor explosion, so that it is impossible for this device to cause the vapor explosion.

In the jet engine of Japanese Unexamined Patent Application Publication No. H11-229965, although there is not enough disclosure about the mechanism of the vapor explosion to draw a conclusion, similar to the first experiment, the vapor explosion does not occur just by heating up to high temperature in a combustion chamber.

### Means for Solving the Problems

The inventor of the present invention provided an on-off valve at the bottom portion of the container for storing the liquid maintained at 300 degrees C or higher, and carried out intermittent injection of water from the on-off valve into the high-temperature liquid, so as to produce a 'hermetically-sealed state by liquid' and succeeded in causing a vapor explosion. Although an explanation of a principal is omitted, a shock wave, occurring simultaneously with the vapor explosion, increases the pressure and expansion rate of the explosion fluid, so that it becomes possible to utilize energy of the high-pressure explosion fluid with a shock wave generated by the vapor explosion as power for an engine and turbine.

A first invention described in Claim 1 relates to a vapor explosion and shock wave generating device, comprising a vapor explosion chamber, comprising a liquid storage container for storing high-temperature liquid at 300 degrees C or higher, and an inlet for intermittently injecting water into the liquid storage container from a bottom portion of the high-temperature liquid, a heater for maintaining the high-temperature liquid at 300 degrees C or higher, and an inlet valve unit for controlling the water injection at the inlet.

The first invention relates to the device for generating a vapor explosion and shock wave, and is an essential invention.

A second invention described in Claim 1 relates to A motor, comprising the vapor explosion and shock wave generating device according to Claim 1, a piston that is driven by utilizing vapor explosion energy and shock wave simultaneously generated by the vapor explosion and shock wave generating device, and a converter unit for converting the piston motion into a rotating motion.

The second to sixth inventions relate to the motor utilizing the vapor explosion energy and shock wave simultaneously generated by the vapor explosion and shock wave generating device of the first invention as a power source, and the second invention is the most essential invention among them.

A third invention described in Claim 3 relates to the motor according to Claim 2, further comprising a return path for holding explosion fluid, mixture of vapor and the high-temperature liquid after the up-stroke of the piston.

A fourth invention described in Claim 4 relates to the motor according to Claim 3, further comprising a vapor exhaust for exhausting vapor separated from the explosion fluid inflowing the return path.

A fifth invention described in Claim 5 relates to the motor according to Claim 4, further comprising a return pump for returning the high-temperature liquid separated from the explosion fluid inflowing the return path into the explosion chamber, the return pump being located in a lower portion of the return path.

A sixth invention described in Claim 6 relates to the motor according to Claim 5, wherein the piston comprises a piston valve that opens at top dead center upon colliding with an upper obstructing protrusion provided in a cylinder and closes at bottom dead center upon colliding with a lower obstructing protrusion provided in the cylinder or the liquid storage container.

A seventh invention described in Claim 7 relates to a turbine device, comprising the vapor explosion and shock wave generating device according to Claim 1 and a turbine that is driven by utilizing vapor explosion energy and shock wave simultaneously generated by the vapor explosion and shock wave generating device.

The seventh to ninth inventions relate to a turbine device utilizing the vapor explosion energy and shock wave simultaneously generated by the vapor explosion and shock wave generating device of the first invention as a power source, and the seventh invention is the most essential invention among them.

An eighth invention described in Claim 8 relates to the turbine device according to Claim 7, comprising the plurality of the vapor explosion and shock wave generating devices, and a controller for controlling timing of intermittently injecting water by the inlet valve unit of each vapor explosion and shock wave generating device.

A ninth invention described in Claim 9 relates to the turbine device according to Claim 8, comprising a pool for circulating a high-temperature liquid for collecting the spattered high-temperature liquid, the pool being provided around the vapor explosion and shock wave generating device, wherein the vapor explosion and shock wave generating device comprises a inlet valve unit for inletting the high-temperature liquid from the pool for circulating high-temperature liquid.

### Effects of the Invention

The present invention relates to the device capable of constantly generating a vapor explosion with shock wave, whose mechanism has not been perfectly clarified. This provides experimental method for research and development utilizing the vapor explosion and shock wave, and utilization thereof for the motor and turbine.

### BRIEF DESCRIPTION OF THE DRAWINGS

Fig. 1 is a schematic diagram of a first embodiment of the present invention.
Fig. 2 is a diagram showing mechanism and function of a pressure-proof valve of the first embodiment of the present invention.
Fig. 3 is a diagram showing another inlet valve unit capable of preventing backflow of high-temperature liquid into an inlet due to explosion pressure upon vapor explosion.
Fig. 4 is a structure diagram of a motor of a second embodiment of the present invention.
Fig. 5 is a structure diagram of a piston and a piston valve.
Fig. 6 is a diagram showing the moment when the vapor explosion occurred immediately after intermittently injecting water from the inlet.
Fig. 7 is a diagram showing that the explosion fluid with shock wave generated due to the vapor explosion is pushing up the piston in a cylinder.
Fig. 8 is a diagram showing the moment when the piston reached to a top dead center on after being pushed up by an explosion fluid.
Fig. 9 is a diagram showing that a return pump, provided in a lower portion of a return path, is injecting the high-temperature liquid in the return path into a liquid storage container.
Fig. 10 is a perspective diagram of a turbine device of a third embodiment.
Fig. 11 is a cross-sectional diagram of the turbine device of the third embodiment.
Fig. 12 is a diagram showing action of an inlet valve unit for a high-temperature liquid.

### DETAILED DESCRIPTION OF THE INVENTION

Note that the first embodiment will mainly describe Claim 1. Moreover, the second embodiment will mainly describe Claims 2 to 6. The third embodiment will mainly describe Claims 7 to 9. The present invention is not to be limited to the above embodiments and able to be embodied in various forms without departing from the scope thereof.

### <<First embodiment>>

### <Concept of First Embodiment>

A first embodiment relates to a vapor explosion and shock wave generating device of a first invention.

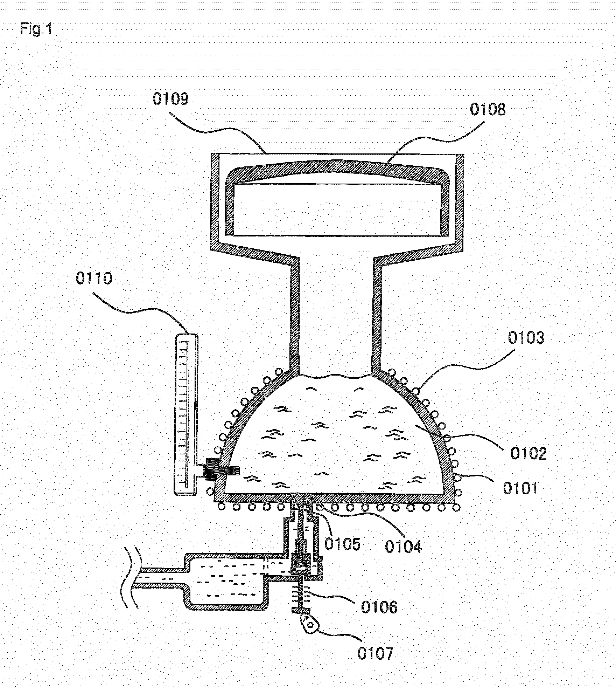

Fig. 1 is a schematic diagram of the first embodiment of the present invention. A high-temperature liquid (0102) including a molten metal is retained in the inside of a liquid retention container (0101). Heating devices (0103) to maintain the high-temperature liquid at a high temperature are provided around the liquid retention container. An inlet (0104) through which water is intermittently charged is provided in the bottom portion of the liquid retention container, and a pressure-proof valve (0105) is provided in the inlet so as to close the inlet. The pressure-proof valve closes the inlet using the force of a spring (0106). However, when the pressure-proof valve is moved upwardly by a timing cam (0107), water is intermittently charged through a clearance between the valve and the inlet. When the water is intermittently charged to the bottom portion-side high-temperature liquid, a vapor explosion and shock waves occur.

In the upper portion of the vapor explosion and shock wave generating device, a cover 0108 for receiving mixture of the spattered high-temperature liquid and the vapor (hereinafter referred to as 'explosion fluid') is provided, and an exhaust 0108 for exhausting only the vapor upward is provided. The mixture of the spattered high-temperature liquid due to the vapor explosion and shock wave is received by the cover, flows downward, and is reused; meanwhile, the vapor is exhausted from the vapor exhaust.

In the liquid storage container, a thermometer 0110 for monitoring temperature of the high-temperature liquid inside is provided.

### <Description of Components of First Embodiment>

The vapor explosion and shock wave generating device of the first embodiment comprises the vapor explosion chamber, the heater, and the inlet valve unit. The vapor explosion chamber comprises the liquid storage container and the inlet. Descriptions thereof will be provided, hereinafter.

The 'liquid storage container' is for 'storing high-temperature liquid at 300 degrees C or higher'. Since the liquid storage container is for storing high-temperature liquid, it is required to have good heat resistant properties. Note that the vapor explosion occurs at 300 - 400 degrees C of high-temperature liquid, general material such as iron is enough for use except when using a higher-temperature liquid. Next, the liquid storage container is required to have strength resistant to pressure or shock wave caused by the vapor explosion. It is assumed that the pressure upon the vapor explosion reaches to several hundred atmospheric pressure, so that the liquid storage container is required to be made of material and have a mechanism for being resistant to such rapidly occurring pressure. Moreover, when attaching the heater to the outside of the liquid storage container, since heat from the heater is used for heating the liquid inside by heat conduction through the liquid storage container, a material having high heat conductivity is preferable.

It is preferable to use metal, whose melting point is below 300 degrees C, for the 'high-temperature liquid', but metal, whose melting point is above 300 degrees C, may be used. Examples of the metal, whose melting point is above 300 degrees C, include tin, bismuth, polonium, and a low-menting-point alloy. Among them, tin has a low melting point, 232 degrees C, and is easily available, so that it is mainly used for the vapor explosion and shock waves generating device of the present invention. It is found in the experiment that the vapor explosion with shock wave occurs when using bismuth. Polonium is radioactive material and it is difficult to handle. It is easily assumed that there is no problem to use metal, whose melting point is above 300 degrees C, based on refinery accident reports etc. Note that, in such cases, special consideration on the strength and heat-resistant properties of the liquid storage contatiner and the inlet valve unit is required.

The high-temperature liquid may be oil. Note that, in the case of oil, it is required to select oil having a high ignition point because of the risk of firing. Since there is a problem of vaporization and deterioration of high-temperature oil, oil is more difficult to use than iron.

The 'inlet' is for 'intermittently injecting water into the liquid storage container from a bottom portion of the high-temperature liquid', and is provided in the bottom portion of the liquid storage container. The term 'bottom portion' means a portion of the liquid storage container, which is filled with a high-temperature liquid, and any portion is suitable as long as it is filled with enough liquid to make the hermetically-sealed state by liquid for causing the vapor explosion. However, the portion near the surface of the high-temperature liquid is not preferable for making the hermetically-sealed state.

It is important to determine the diameter of the inlet for intermittently injecting the appropriate amount of water in order to cause the vapor explosion. In the vapor explosion and shock wave generating device of the first embodiment, the diameter thereof is 5mm. Note that, the diameter of the inlet is relatively determined depending on relationships between type, amount, temperature of high-temperature liquid, open time of the pressure-proof valve, and water pressure of water inletted etc, and there is no specific size. It is required to make a shape of the inlet, such that there are no leaks of the high-temperature liquid upon contacting with a head of the pressrue-proof valve when the pressure-proof valve of the inlet valve unit closes upon the vapor explosion. In the vapor explosion and shock wave generating device of the first embodiment, the inlet is a conical shape. Therefore, the shape is like a screw hole to fit in exactly with a flat screw head. Note that any shape, which is enough for preventing the leaks of the high-temperature liquid, may be used.

The 'vapor explosion chamber' comprises the liquid storage container and the inlet, and it is preferable to provide a cover for receiving the explosion fluid with shock wave generated by the vapor explosion, and an exhaust for exhausting vapor. Additionally, it is preferable to provide a thermometer for monitoring temperature of the high-termperature liquid in the liquid storage container.

The 'heater' is for 'maintaining the high-temperature liquid at 300 degrees C or higher'. As an example of the heater, heating wire wound on the outside of the liquid storage container is assumed. Moreover, a plurality of tubes, in which heating wires pass through, and which penetrate through the liquid storage container, thereby improving thermal conductivity, are assumed. It is omitted in Fig. 1, in the vapor explosion and shock wave generating device of the first embodiment, the heater is wrapped by heat insulating material for improving thermal conductivity.

Examples of heating method for the high-temperature liquid include electrothermal heating, heating by combustion, and heating by focusing the sunlight using linear Fresnel lens etc., may be selected according to purpose.

As heating method, directly heating the vapor explosion chamber, cylinder, and return pump etc. of the present invention may be used, or a method, wherein the heater is provided on the position far from the vapor explosion chamber, the vapor explosion chamber and the heater are connected through a liquid path comprising a heat-retention pipe, and heated high-temperatrue liquid is circulated in the liquid storage container, which needs the high-temperatrue liquid, may be used.

It is important to determine the temperature of the high-temperatrue liquid since it has an effect on success and scale of the vapor explosion and shock wave. When using tin as the high-temperatrue liquid, a small-scale explosion occurred at about 300 degrees C, and an intense explosion occurred at about 350-370 degrees C. In Japanese Patent Application No. 2000-106916, the temperature of the heating chamber is set to about 300 degrees C for causing the vapor explosion. However, as described above, the vapor explosion can occur below such high temperatures.

The 'inlet valve unit' is for 'controlling the water injection at the inlet'. As shown in Fig. 1, a tube is connected to the inlet, and a predetermined water pressure is placed on the water. The inlet valve unit controls timing and amount of water injection upon the intermittently-injecting water by opening or closing the valve. The functionally important point of the inlet valve unit is injecting appropriate amount of water for vapor explosion, and is closing the valve immediately after the vapor explosion to shut off water injection and preventing the high-temperature liquid from flowing into the inlet.

As a method for controlling the amount of water injection, first, water pressure of the water supplied to the inlet is controlled. As an adjustment method for the amount of water by the inlet valve unit, first, fine adjustment of height upon lifting the valve, and second, adjustment of time length of lifting the valve. These can be carried out by changing the shape of the timing cam, or by providing a method for adjustment of the gap between the timing cam and the pressure-proof valve. When controlling the pressure-proof valve not by timing cam but by electromagnetic method, the control is carried out by a computer.

It is very important to close the valve immediately after the vapor explosion to prevent the high-temperature liquid from flowing into the inlet. When the high-temperature liquid is molten metal, there is a possibility that the molten metal flows into the inlet and is cooled, thereby causing fixation to the inlet and malfunction of the valve. When the vapor explosion occurs, inside pressure of the liquid storage container instantaneously rises, and it is necessary to close the valve then. In vapor explosion and shock wave generating device of the first embodiment, the valve is closed by utilizing pressure caused by the vapor explosion.

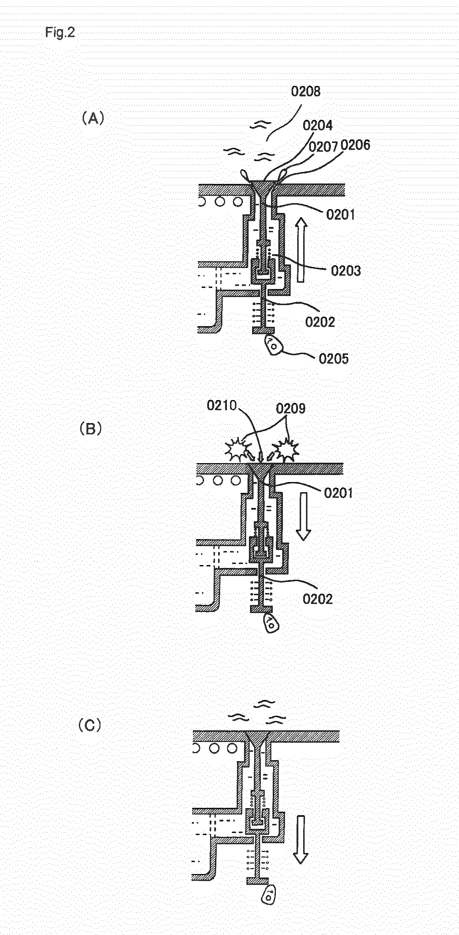

Fig. 2 is a diagram showing mechanism and function of a pressure-proof valve of the first embodiment of the present invention. An inlet shaft 0201 and a timing cam shaft 0202 are connected to the pressure-proof valve and are slightly stretchable in an axial direction, and are normally fixed in a state of being stretched by a spring 0203. In Fig. 2(A), the pressure-proof valve 0204 is pushed up by a timing cam 0205, and small amount of water 0207 is intermittently injected into the high-temperature liquid 0208 from a inlet 0206. In Fig. 2(B), water and the high-temperature liquid are in contact with each other, thereby causing the vapor explosion 0209, so that the inlet shaft 0201 of the pressure-proof valve is pushed down by pressure 0210. Here, the timing cam shaft 0202 is still pushed up by the timing cam and cannot go downward. In Fig. 2(C), the timing cam further rotates and goes off the bottom portion of the timing cam shaft, and both inlet shaft and timing cam shaft stay down.

As described above, the pressure-proof valve of the first embodiment closes the valve immediately after occurrence of the vapor explosion, thereby preventing the high-temperature liquid from flowing into the inlet.

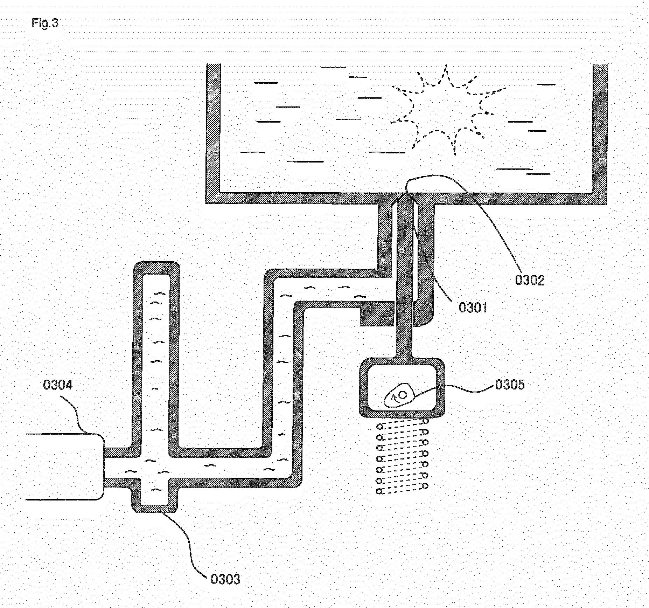

Fig. 3 is a diagram showing another inlet valve unit capable of preventing from backflow of high-temperature liquid into an inlet due to explosion pressure upon vapor explosion. Here, a head of a pressure-proof valve 0301 is formed to have a conical and protruding shape, and an inlet 0302 is formed to have a conical shape protruding toward the liquid storage container. In order to prevent backflow of high-temperature liquid into an inlet due to explosion pressure upon vapor explosion, the water pressure inside a water reservoir 0303 is maintained to be higher than the pressure of the vapor explosion by a high-pressure injection pump 0304. The pressure-proof valve is pushed down by a timing cam 0305 and opens, and even if the vapor explosion occurs simultaneously with the injection of water, the backflow never occurs due to pressure difference. Note that, the amount of water injection can be controlled by the fine adjustment of diameter of the inlet and by the adjustment of opening time of the valve instantaneously.

It is preferable to use anoxic water, where oxygen in the water is removed through sufficient boilings in order to prevent oxidation of the high-temperature liquid. Moreover, it is preferable that water temperature is maintained to be temperature just under the boiling point in order to decrease temperature loss of the high-temperature liquid.

### «Second embodiment»

### <Concept of Second Embodiment>

A second embodiment relates to a motor device driven by utilizing vapor explosion energy and shock wave simultaneously generated by the vapor explosion and shock wave generating device of the first embodiment.

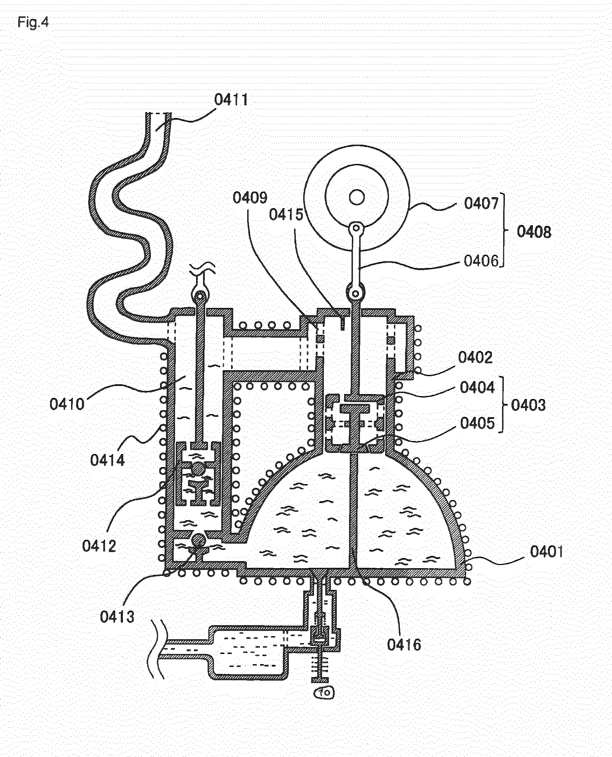

Fig. 4 is a structure diagram of a motor of a second embodiment of the present invention. The motor of the second embodiment comprises a vapor explosion and shock wave generating device 0401. A cylinder 0402 is provided in the upper portion of the vapor explosion and shock wave generating device, and a piston 0403 is housed in the cylinder in a state where the piston can move up and down. The piston comprises a piston body 0404 and a piston valve 0405 provided in the piston. A shaft in the upper portion of the piston body is protruding through a hole on the top portion of the cylinder, and reciprocating motion of the piston is converted into rotary motion by a converter unit 0408 comprising a con rod 0406 and a crank shaft 0407, which are connected to the shaft. An exhaust for explosion fluid 0409 for exhausting mixture of vapor and the high-temperature liquid, generated by the vapor explosion, to outside the cylinder is provided in the upper portion of the cylinder. The explosion fluid exhausted from the exhaust for explosion fluid to outside the cylinder flows to a return path 0410, in that process, the high-temperature liquid having heavy specific weight goes to the lower portion of the return path, and the vapor having light specific weight goes to a vapor exhaust 0411 connected to the upper portion of the return path, thereby separating the explosion fluid into the high-temperature liquid and the vapor. The lower portion of the return path has a shape of cylinder, and houses a return pump 0412. The high-temperature liquid in the liquid storage container is mixed with the vapor and is exhausted from the exhaust for explosion fluid to outside as the explosion fluid, so that there is always a deficit of the high-temperature liquid necessary for a subsequent explosion. The return pump performs synchronized motion with the piston by power acquired through the converter unit, and forcibly returns necessary amount of the high-temperature liquid to the liquid storage container. A backflow valve 0413 is provided in the connection between the return path and the liquid storage container, thereby preventing the high-temperature liquid from its backflow into the return path upon the vapor explosion. A thermometer 0414 is placed to the cylinder and around the return path other than the vapor explosion and shock wave generating device.

### <Description of Components of Second Embodiment>

The motor of the second invention comprises a vapor explosion and shock wave generating device, a piston, and a converter unit.

The 'vapor explosion and shock wave generating device' is the vapor explosion and shock wave generating device of the first invention.

The 'piston' is 'driven by utilizing vapor explosion energy and shock wave simultaneously generated by the vapor explosion and shock wave generating device'. Therefore, the piston is pushed up inside the cylinder by high pressure in the liquid storage container caused by the vapor explosion and shock wave, and acquires power. Normally, the piston has a cylindrical shape, but is not limited thereto.

The 'converter unit' is for 'converting piston motion into rotation motion'. Normally, a crank pin of a crank arm connected to the crankshaft and the piston are connected by the con rod.

The motor of the third invention is the same as that of the second invention, and further comprises a return path.

The 'return path' is for 'holding explosion fluid, mixture of vapor and the high-temperature liquid after the upstroke of the piston'. As describe above, the return path separates the explosion fluid into the high-temperature liquid and the vapor. This separation is automatically carried out in the return path due to the difference in specific weight between the vapor and the high-temperature liquid. Therefore, the high-temperature liquid having heavy specific weight goes to the lower portion of the return path, and the vapor having light specific weight goes to the upper portion of the return path.

The lower portion of the return path is connected to the liquid storage container to return the high-temperature liquid. The backflow valve is provided in the connection, thereby preventing the high-temperature liquid from its backflow into the return path upon the vapor explosion.

It is preferable to place the heater device around the return path. The reason is that the high-temperature liquid in the return path is returned to inside the vapor explosion and shock wave generating device, and is for causing the vapor explosion.

The motor of the fourth invention is the same as that of the third invention, and further comprises a vapor exhaust.

The 'vapor exhaust' is for 'exhausting vapor separate from the explosion fluid inflowing the return path'. The vapor exhaust is connected to the upper portion of the return path, and exhausts vapor separated fro the explosion fluid in the return path.

The motor of the fifth invention is the same as that of the fourth invention, and further comprises a return pump.

The 'return pump' is for 'returning the high-temperature liquid separated fro the explosion fluid inflowing the return path into the explosion chamber'. The return pump is housed in the cylinder in the lower portion of the return path. The return pump performs s synchronized motion with the piston by power acquired through the converter unit, and forcibly returns the necessary amount of the high-temperature liquid to the liquid storage container. The return pump should the high-temperature liquid into the liquid storage container upon downward motion and should not pull the high-temperature liquid back upon upward motion. For this purpose, as shown in Fig. 4, the return pump of the second embodiment has the valve for implementing the above function.

The spherical valve in the return pump is made of light metal (aluminum), and floatable in the high-temperature liquid (when using molten metal such as tin or bismuth) due to difference in specific weight. This functions preferably for this embodiment. Moreover, a valve using heat-proof spring may be used.

The motor of the sixth invention is the same as that of the fifth invention, wherein 'the piston comprises a piston valve that opens at top dead center upon colliding with an upper obstructing protrusion provided in a cylinder and closes at bottom dead center upon colliding with a lower obstructing protrusion provided in the cylinder or the liquid storage container'.

The 'top dead center' is the highest point, to which the piston, moving up and down, can move, and the 'bottom dead center' is the lowest point to which the piston can move. Return to Fig. 4, the upper obstructing protrusion 0415 is a protrusion placed on the top portion of the cylinder, and has a function of opening the piston valve by pushing down the piston valve in the piston body through the hole on the top portion of the cylinder when the piston reaches near to the top dead center. The lower obstructing protrusion 0416 is a protrusion placed on the bottom portion of the cylinder, and has a function of closing the piston valve by pushing up the piston valve when the piston reaches near to the bottom dead center.

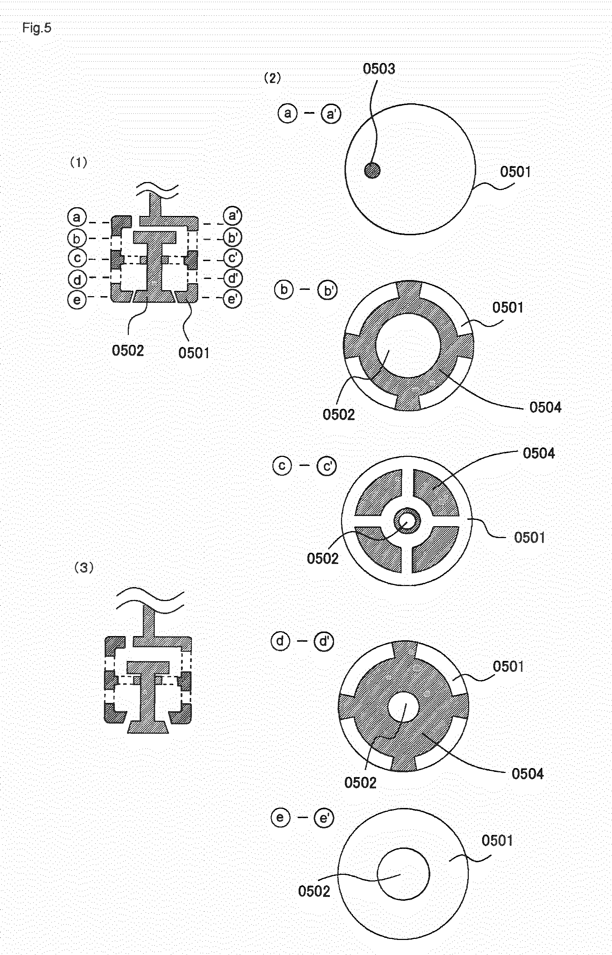

Fig. 5 is a structure diagram of the piston and the piston valve. The piston comprises a piston body 0501, and a piston valve 0502. Fig. 5(2) is one of cross-sectional diagrams of the piston cut by some lines as shown in Fig. 5(1). Fig. 5(1) shows the piston valve in a closing state, and Fig. 5(3) shows the piston valve in an opening state.

In a cross-sectional diagram along the line (a)-(a'), only the piston body is shown. In this section, a hole 0503, through which the upper obstructing protrusion placed in the cylinder can smoothly pass, is shown (black portion in Fig. 5). In a cross-sectional diagram along the line (b)-(b'), the piston body and the piston are shown. In this section of the piston body, a 'hole' 0504, through which the explosion fluid generated in the explosion chamber by the vapor explosion and shock wave passes, is shown. In a cross-sectional diagram along the line (c)-(c'), the piston body and the piston valve are shown. In this section of the piston body, the'hole'0504, through which the explosion fluid passes, is shown. Moreover, in this section, there is a gap between the piston body and the piston valve. When this gap is too large, the degree of freedom of the piston valve upon opening in a horizontal direction in Fig. 5 becomes excessive, thereby causing instability in balance of the piston valve and the piston body. Meanwhile, when this gap is too small, the open/dose action of the valve by up and down motion of the piston valve cannot be smoothly performed. Therefore, it is preferable to appropriately design this gap considering the above points. In a cross-sectional diagram along the line (d)-(d'), the piston body and the piston valve are shown. In this section, there is a large gap between the piston body and the piston valve

(black portion in Fig. 5). Moreover, in this section of the piston body, the 'hole' 0504, through which the explosion fluid passes, is shown. In a cross-sectional diagram along the line (e)-(e'), the piston body an the piston valve are shown. In this section, the piston body and the piston valve are configured, such that they closely contact with each other without gap. Moreover, in Fig. 5(3), the piston valve performs closing of the valve by placing upward power on the portion having wide area in the section.

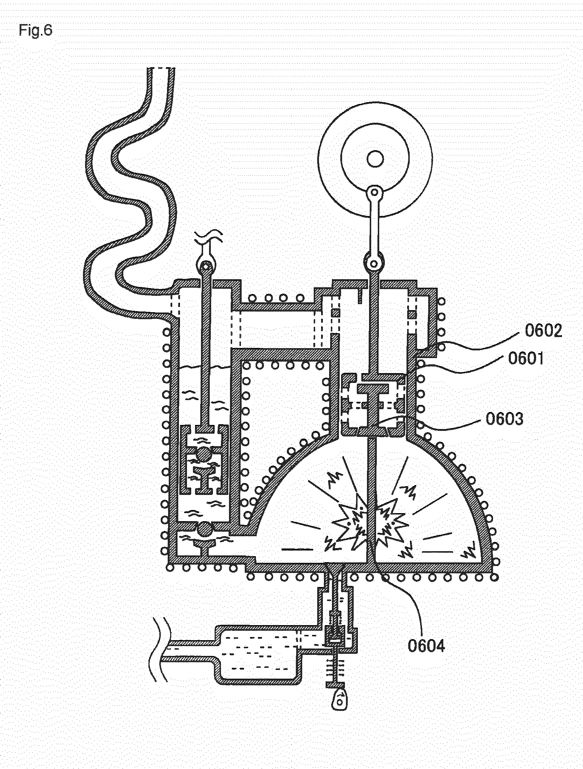

Hereinafter, with reference to Figs. 6 to 9, detailed description of the process of converting the vapor explosion energy and shock wave simultaneously generated into rotary motion by the motor of the second embodiment is provided. Fig. 6 is a diagram showing the moment when the vapor explosion occurred immediately after intermittently injecting water from the inlet. Here, a piston 0601 stays at the bottom dead center in a cylinder 0602. A piston valve 0603 in the piston is sustained by a lower obstructing protrusion 0604 and closes. Here, as described above, the pressure-proof valve is still pushed upward by the timing cam, and simultaneously, is pushed downward by pressure of the vapor explosion, so that it is in a closing state by the action of the spring provided inside.

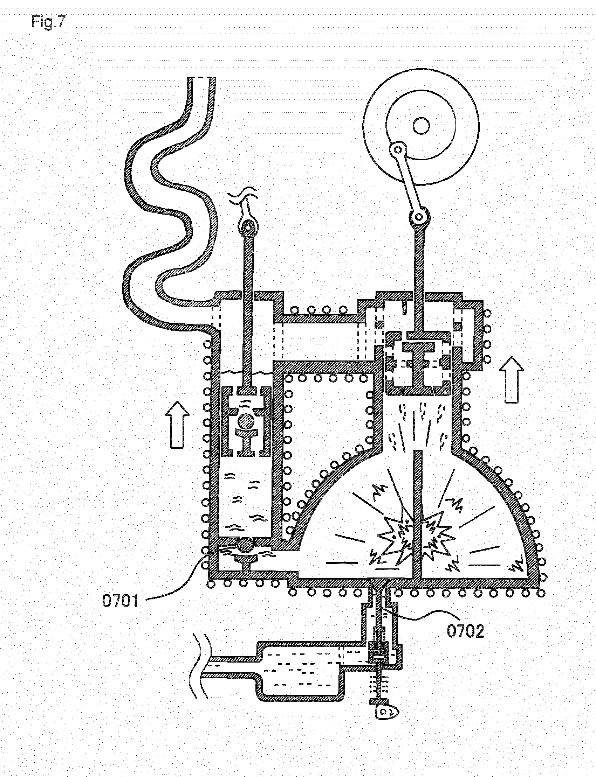

Fig. 7 is a diagram showing that the explosion fluid with shock wave generated due to the vapor explosion is pushing up the piston in a cylinder. The arrow on the right side of the cylinder indicates direction that the piston movies. Here, the piston valve in the piston is pushed upward by pressure of the explosion fluid, and remains in a closing state after losing the sustaining by the lower obstructing protrusion. Meanwhile, a backflow valve 0701 is pushed by pressure of the explosion fluid, thereby preventing the high-temperature liquid from backflow into the return path. A pressure-proof valve 0702 is in a closing state without the sustaining by the timing cam.

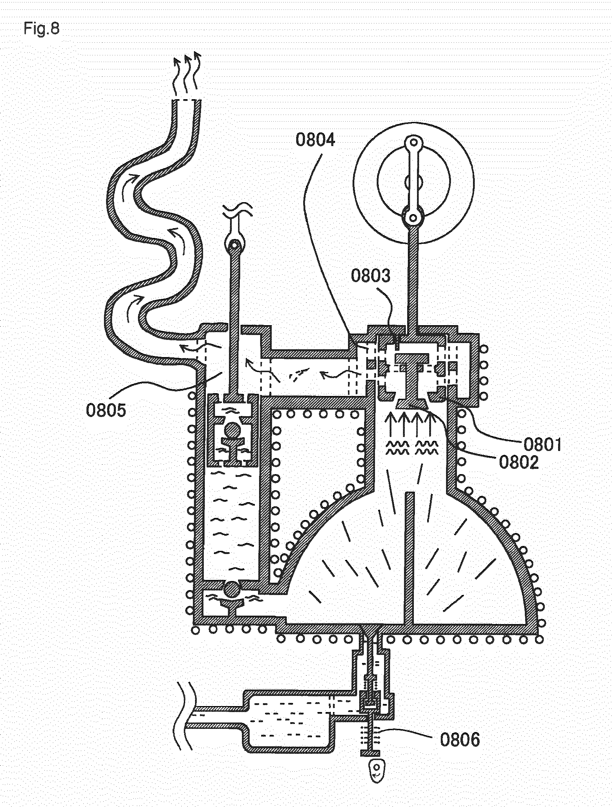

Fig. 8 is a diagram showing the moment when the piston pushed up by the explosion fluid reached to a top dead center. Here, the piston valve 0802 in the piston is pushed downward by an upper obstructing protrusion 0803, and in an opening state. From the opened piston valve, the explosion fluid, mixture of the high-temperature liquid and the vapor, flows into a return path 0805 through an exhaust for explosion fluid 0804. Since the piston valve is released, pressure in the liquid storage container rapidly drops, and the backflow valve is also released. Meanwhile, the pressure-proof valve still closes by action of a spring 0806. As to the explosion fluid flowing into the return path, the high-temperature liquid having heavy specific weight goes to the lower portion of the return path, and the vapor having light specific weight goes to the upper portion of the return path and is exhausted from the vapor exhaust, thereby being separated into the high-temperature liquid and the vapor.

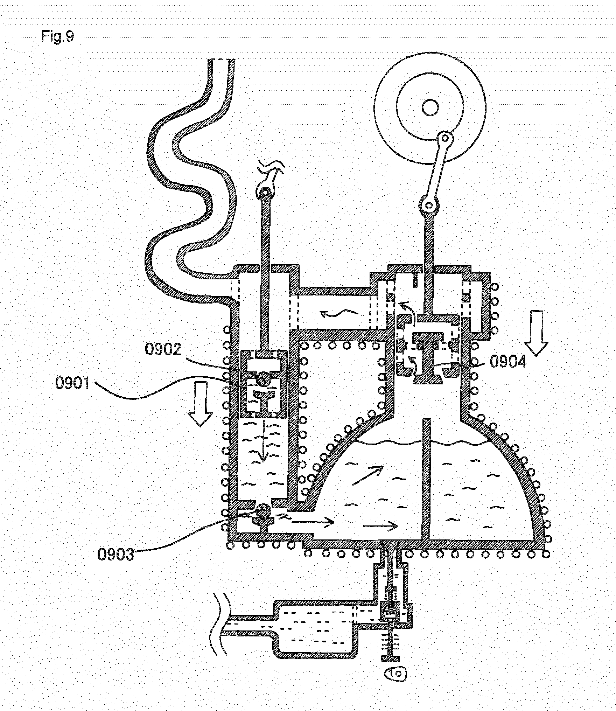

Fig. 9 is a diagram showing that a return pump, provided in a lower portion of a return path, is injecting the high-temperature liquid in the return path into a liquid storage container. As a result of the vapor explosion, a portion of the high-temperature liquid flows outside of the liquid storage container. Accordingly, it is necessary to supply the high-temperature liquid with the liquid storage container for preparing the next vapor explosion. In Fig. 9, the arrow on the left side of the return pump indicates direction that the return pump movies. Here, a valve 0902 in the return pump closes by the pressure of the high-temperature liquid. A backfiow valve 0903 provided in the connection between the return path and the liquid storage container is released. By the return pump, the high-temperature liquid in the lower portion of the return path is sent into the liquid storage container, and the high-temperature liquid is supplied with the liquid storage container. White the return pump presses the high-temperature liquid into the liquid storage container, the piston moves from the top dead center to the bottom dead center. The arrow on the right side of the cylinder indicates direction that the piston moves. A piston valve 0904 in the piston is released, so that the explosion fluid is exhausted to the return path through the piston. After this, process returns to Fig. 6, and same process is repeated.

### «Third embodiment»

### <Concept of Third Embodiment>

A third embodiment relates to a turbine device driven by utilizing vapor explosion energy and shock wave simultaneously generated by the vapor explosion and shock wave generating device of the first embodiment.

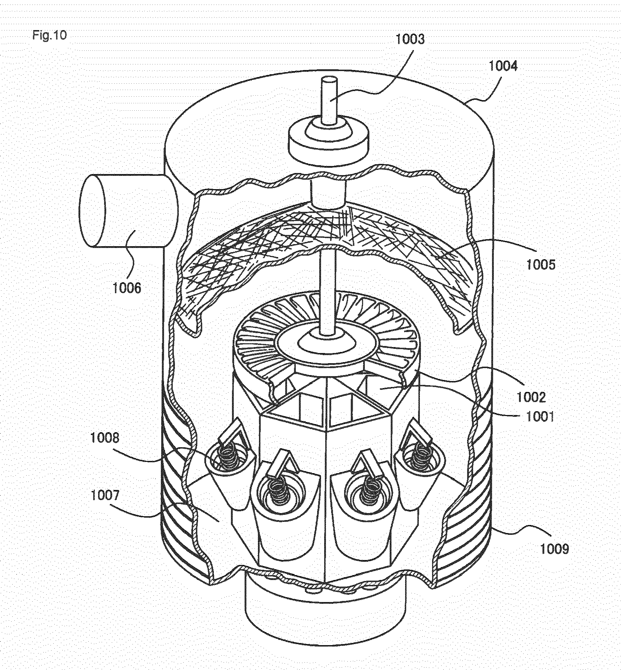

Fig. 10 is a perspective diagram of a turbine device of the third embodiment. Fig. 10 includes sectional diagram for easy understanding of internal parts. The turbine device of the third embodiment comprises a vapor explosion chamber 1001, and rotation blade 1002 is placed thereon. An axis of the rotation blade is fixed to a rotation axis 1003, and the rotation blade is counted on the top portion of the turbine body 1004 in a rotatable state. A net cover for explosion fluid 1005 is placed on the rotation blade, An exhaust 1006 is connected to the upper portion of the turbine. The lower portion of the turbine forms a pool for circulating high-temperature liquid 1007. An inlet valve for high-temperature liquid 1008 is placed in the wall between the vapor explosion chamber and the pool for circulating high-temperature liquid. A heater 1009 is placed around the vapor explosion chamber and the pool for circulating high-temperature liquid.

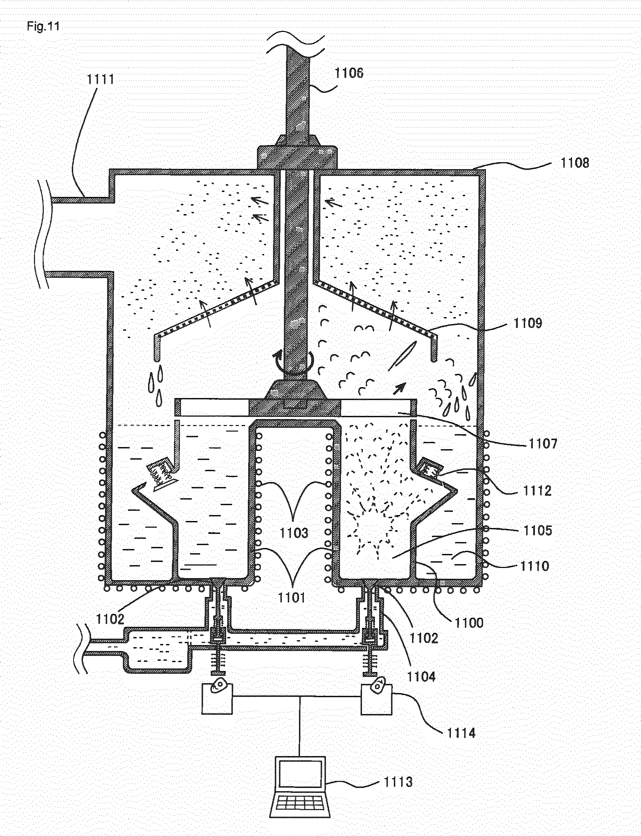

Fig. 11 is a cross-sectional diagram of the turbine device of the third embodiment. The turbine device of the third embodiment comprises a vapor explosion and shock wave generating device comprising a vapor explosion chamber 1100, a heater 1103, and an inlet valve unit 1104. The vapor explosion chamber 1100 comprises a liquid storage container 1101 and an inlet 1102. The turbine device of the third embodiment comprises a plurality of such vapor explosion and shock wave generating devices. Each vapor explosion chamber stores high-temperature liquid 1105, and the inlet valve unit, provided in the inlet of the bottom portion of the liquid storage container, opens the pressure-proof valve, so that appropriate amount of water is intermittently injected to the bottom portion of the high-temperature liquid. The injected water causes a vapor explosion due to the heat transfer from high-temperature liquid. This vapor explosion with shock wave rapidly increases pressure in the vapor explosion chamber, thereby bringing up the explosion fluid, mixture of the high-temperature liquid and the vapor to the upper portion of the vapor explosion chamber. The center of a rotation blade 1107 is fixed on the upper portion of the vapor explosion chamber by the rotation axis 1106, and the rotation blades receives jet of the explosion fluid, thereby acquiring rotative force. The explosion fluid rotates the rotation blades and passes through between the blades. In the upper space in the turbine body 1108, the high-temperature liquid having heavy specific weight goes to the lower portion, and the vapor having light specific weight goes to the upper portion, thereby separating into the high-temperature liquid and the vapor. A net cover for explosion fluid 1109, being placed on the rotation blade with appropriate clearance, receives a part of the high-temperature liquid in the explosion fluid, thereby promoting the separation of the explosion fluid into the high-temperature liquid and the vapor. The high-temperature liquid separated from the explosion fluid is collected by a pool for circulating high-temperature liquid 1110, placed adjacent to the vapor explosion chamber, and the vapor separated from the explosion fluid is exhausted from an exhaust 1111 connected to the upper portion of the turbine body. An inlet valve for high-temperature liquid 1112 is placed in the wall between the vapor explosion chamber and the pool for circulating high-temperature liquid. This valve closes by pressure upon the vapor explosion, and is released in other times. The high-temperature liquid in the pool for circulating high-temperature liquid flows into the vapor explosion chamber through this valve, so that the high-temperature liquid is refilled to the vapor explosion chamber because the high-temperature liquid has spattered outside by the vapor explosion and has become insufficient. Although it is necessary for driving the turbine to continuously cause the vapor explosion and shock wave, it requires time interval after the vapor explosion to take the high-temperature liquid for next vapor explosion from the inlet valve for high-temperature liquid into the vapor explosion chamber, so that appropriate time interval is required between the respective vapor explosions. Therefore, the turbine device comprises the plurality of vapor explosion and shock wave generating devices, which sequentially generate vapor explosions and shock waves, thereby continuously providing power to the rotation blade as a whole. A controller 1113 controls a timing cam 1114 of each vapor explosion and shock wave generating device, thereby achieving the above purpose.

### <Description of Components of Third Embodiment>

A turbine device of a seventh invention comprises the vapor explosion and shock wave generating device and the turbine. The 'vapor explosion and shock wave generating device' is the same as that of the first invention. The turbine device of a seventh invention may be single or multiple.

The 'turbine' is a motor that is 'driven by utilizing vapor explosion energy and shock wave simultaneously generated by the vapor explosion and shock wave generating device'. Therefore, a motor, wherein pressure and motion energy of the explosion fluid generated by the vapor explosion and shock wave is converted to rotary motion energy. Typically, it has a mechanism as in the turbine device of the third embodiment, wherein the rotation axis and the rotation are attached to the turbine body in a rotatable state.

A turbine device of an eighth invention is the same as that of the seventh invention, and comprises a plurality of vapor explosion and shock wave generating devices and the controller.

The 'controller' is for 'controlling timing of intermittently injecting water by the inlet valve unit of each vapor explosion and shock wave generating device'. As described above, it is preferable to intermittently inject water in the plurality of vapor explosion and shock wave generating devices, thereby sequentially generating vapor explosions and shock waves. The controller performs control of actions of the inlet valve units provided in the plurality of vapor explosion and shock wave generating devices to continuously generate the vapor explosions and shock waves. This control may be carried out by rotary drive of the timing cam using a motor controlled by a computer, or may be carried out by electromagnetic control using electromagnetic valve for the inlet valve unit. Moreover, the inlet valve unit of each vapor explosion and shock wave generating device may sequentially open or close by using a timing cam, which can rotate by mechanically delaying the timing.

A turbine device of a ninth invention is the same as that of the eighth invention, and further comprises a pool for circulating high-temperature liquid and an inlet valve for high-temperature liquid.

The 'pool for circulating high-temperature liquid' is provided 'around the vapor explosion and shock wave generating device, and is 'collecting the spattered high-temperature liquid'. The pool for circulating high-temperature liquid may have a heater for preventing temperature decrease of the high-temperature liquid after being collected.

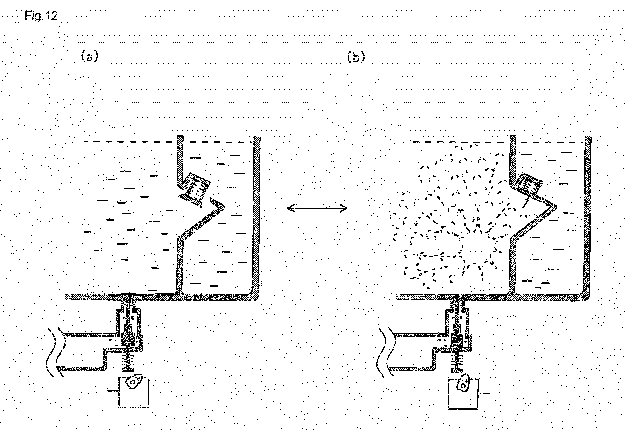

The 'inlet valve for high-temperature liquid' is provided to the vapor explosion and shock wave generating device, and 'inlets the high-temperature liquid from the pool for circulating high-temperature liquid' to the vapor explosion and shock wave generating device. Fig. 12 is a diagram showing action of an inlet valve for high-temperature liquid. When the vapor explosion does not occur, as shown in Fig. 12(a), the inlet valve for high-temperature liquid opens, and inlets the high-temperature liquid from the pool for circulating high-temperature liquid to the vapor explosion chamber. At this point, if the vapor explosion occurs, as shown in Fig. 12(b), the inlet valve for high-temperature liquid receives the pressure of explosion fluid (indicated by arrow), and closes. In this the explosion fluid does not backflow to the pool for circulating high-temperature liquid through the inlet valve for high-temperature liquid, and the entire explosion fluid go to the rotation blade. Strength and size etc. of the inlet valve for high-temperature liquid is not limited and may be a matter of design according to purpose of drive. However, the inlet valve for high-temperature liquid has to be provided with durability even when repeatedly receiving the explosion energy of the vapor explosion and shock wave. Moreover, the inlet valve for high-temperature liquid may be an automatically controlled pump, which can stably send a predetermined amount of the high-temperature liquid from the pool for circulating high-temperature liquid to the vapor explosion chamber. The above is possible by using the conventional technology.

### Industrial Applicability

The invention relates to a basic technology concerning the vapor explosion, and to an engine and a turbine that are driven by utilizing vapor explosion.

Moreover, in recent years, MHD electric power generation, which can efficiently produce electric power from electromagnetic fluid, attracts attention. In the vapor explosion generating device of the present invention, the MHD electric power generator is placed in the high-speed flowing path for the high-pressure liquid metal, high-pressure vapor, and the high-pressure shock wave, thereby enabling development of the MHD electric power generator by liquid metal by utilizing the vapor explosion.

### Description of Reference Numerals

- 0101: Liquid storage container
- 0102: High-temperature liquid
- 0103: Heater
- 0104: Inlet
- 0105: Pressure-proof valve
- 0106: Spring
- 0107: Timing cam
- 0108: Cover
- 0109: Exhaust
- 0110: Thermometer

## Claims

1. A vapor explosion and shock wave generating device, comprising:
a vapor explosion chamber, comprising a liquid storage container for storing high-temperature liquid at 300 degrees C or higher, and an inlet for intermittently injecting water into the liquid storage container from a bottom portion of the high-temperature liquid;
a heater for maintaining the high-temperature liquid at 300 degrees C or higher; and
an inlet valve unit for controlling the water injection at the inlet.

2. A motor, comprising:
the vapor explosion and shock wave generating device according to Claim 1
a piston that is driven by utilizing vapor explosion energy and shock wave simultaneously generated by the vapor explosion and shock wave generating device; and
a converter unit for converting piston motion into rotation motion.

3. The motor according to Claim 2, further comprising:
a return path for holding explosion fluid, mixture of vapor and the high-temperature liquid after push-up of the piston.

4. The motor according to Claim 3, further comprising:
a vapor exhaust for exhausting vapor separated from the explosion fluid inflowing the return path.

5. The motor according to Claim 4, further comprising:
a return pump for returning the high-temperature liquid separated from the explosion fluid inflowing the return path into the explosion chamber, the return pump being located in a lower portion of the return path.

6. The motor according to Claim 5,
wherein the piston comprises a piston valve that opens at top dead center upon colliding with an upper obstructing protrusion provided in a cylinder and closes at bottom dead center upon colliding with a lower obstructing protrusion provided in the cylinder or the liquid storage container.

7. A turbine device, comprising:
the vapor explosion and shock wave generating device according to Claim 1; and
a turbine that is driven by utilizing vapor explosion energy and shock wave simultaneously generated by the vapor explosion and shock wave generating device.

8. The turbine device according to Claim 7, comprising:
the plurality of the vapor explosion and shock wave generating devices; and
a controller for controlling timing of intermittently injecting water by the inlet valve unit of each vapor explosion and shock wave generating device.

9. The turbine device according to Claim 8, comprising:
a pool for circulating high-temperature liquid for collecting the spattered high-temperature liquid, the pool being provided around the vapor explosion and shock wave generating device,
wherein the vapor explosion and shock wave generating device comprises a inlet valve unit for iniefting the high-temperature liquid from the pool for circulating high-temperature liquid.
